# EUROPEAN PATENT SPECIFICATION

(11) **EP 2 940 258 B1**
(45) Date of publication and mention of the grant of the patent: **28.11.2018**
(21) Application number: 13868327.1
(22) Date of filing: 20.12.2013
(51) Int. Cl.: F01K 25/10, F01D 15/10, F01D 25/16, F16C 32/04, F01K 7/16, F01K 13/00, F22B 1/18

(54) **TURBINE DEVICE, AND WASTE HEAT RECOVERY POWER GENERATION SYSTEM INCLUDING SAME**
TURBINENVORRICHTUNG UND SYSTEM ZUR STROMERZEUGUNG DURCH ABWÄRMERÜCKGEWINNUNG DAMIT
DISPOSITIF DE TURBINE ET SYSTÈME DE PRODUCTION D'ÉNERGIE PAR RÉCUPÉRATION DE LA CHALEUR PERDUE QUI COMPREND CE DERNIER

(30) Priority: 27.12.2012 KR 20120154351
(43) Date of publication of application: 04.11.2015
(73) Proprietor: POSCO, Gyeongsangbuk-do 790-300 (KR)
(72) Inventor: JANG, Tae-In, Gwangyang-si Jeollanam-do 545-711 (KR); KWEON, Yong-Hun, Gwangyang-si Jeollanam-do 545-711 (KR); JEE, Chang-Woon, Gwangyang-si Jeollanam-do 545-711 (KR); KIM, Jung-Kuk, Gwangyang-si Jeollanam-do 545-711 (KR)
(74) Representative: Potter Clarkson LLP
(86) International application number: PCT/KR2013/011941
(87) International publication number: WO 2014/104659

(56) References cited:
- EP-A2- 2 017 435
- CN-U- 202 326 729
- JP-A- H01 268 446
- JP-A- H08 218 816
- JP-A- 2005 501 500
- JP-A- 2008 175 293
- KR-A- 20090 007 526
- KR-A- 20090 057 012
- US-A1- 2003 038 553

## Description

### [Technical Field]

The present disclosure relates to a turbine apparatus, and more particularly, to a turbine apparatus having increased electricity generation efficiency in addition to an increased turbine lifespan which facilitates the use of waste heat by replacing a mechanical (contact) bearing structure with a non-contact-type electronic bearing structure, and further, operating in a stable manner through structural improvements of a disk part and appropriate disposition of a mechanical bearing part, and a waste heat recovery power generation system including the same.

### [Background Art]

In general, power plants are classified as hydroelectric power plants, thermoelectric power plants, nuclear power plants, combined cycle power plants, and the like, according to an energy source utilized thereby and an electricity generation method based thereon.

Recently, research into technology for recovering and reusing waste heat generated in industrial processes by applying such waste heat to power generation systems has been actively undertaken.

That is, the research into a technology by which waste heat is recovered from high temperature exhaust gas generated in slaked lime processing procedures or from steel plants discharging high temperature exhaust gas and the like from a variety of furnaces, sintering apparatuses, and the like, aimed at applying the technology to electric power generating systems, has been mainly carried out.

For example, in steel plants, a considerable amount of waste heat is generated in a coke producing process, blast furnace operations, or the like, and in this case, waste heat temperatures range from about 150°C to about 300°C. Hence, it may be difficult to apply such a low temperature range to commercialization.

Meanwhile, although research into a power generation system using a temperature difference of sea water or using waste heat from industrial settings has been conducted, in a case in which water is used as a working fluid for the generation of electricity, a difference in temperature thereof should be equal to or higher than 250°C. Therefore, commercialization thereof may be difficult.

However, such a temperature differential in working fluid is required because rotary mechanical contact ball bearings or journal bearings are used in the majority of power transfer devices in electricity generation turbine equipment, and further, power is transferred through a screw having a relatively great amount of friction in an axial direction. Thus, power generation efficiency may be deteriorated due to such friction, such that it may be difficult to generate electricity using low temperature waste heat. Therefore, commercialization of such a process using waste heat may be difficult.

Currently, high temperature exhaust gas generated in steel plants or cement plants is not recycled as waste heat, but mostly discarded.

For example, Korean Patent Laid-Open Publication No. 2012-0058582 proposes a technology relevant to power generation practically using waste heat by collecting energy discarded by an engine to generate electrical power, but discloses a bearing supporting a principal axis of a turbine as a thrust bearing.

Further, Korean Patent Laid-Open Publication No. 2006-0010427 discloses a gas turbine apparatus, in particular, using a thrust bearing and a journal bearing.

In addition, Japanese Patent Laid-Open Publication No. 2011-083150 discloses an accelerating power generator and a technology using mechanical contact bearings (ball bearings) provided at both ends thereof.

Therefore, in the turbine apparatuses of general power generation equipment, since mechanical contact bearings may be applied to rotors (rotary shafts), a substantial problem as described above is present therein.

In particular, since such mechanical contact bearings generally use oil (lubricating oil), a problem occurring due to the leakage of oil may occur. Furthermore, since existing systems use steam or high temperature gas, a water hammer phenomenon may occur in the turbine.

European Patent Application Publication No. 2017435 discloses a turbomachine having a rotor shaft supported by magnetic bearings.

United States Patent Application Publication No. 2003/0038553 discloses a permanent magnet turbo-generator having magnetic bearings supporting a shaft radially for rotation about a precisely established axis, and a magnetic thrust bearing for maintaining the shaft in a precisely fixed axial position.

Japanese Patent Laid-Open Publication No. H08-218816 discloses a low temperature power generation apparatus including turbines and a generator arranged on a rotating shaft supported by magnetic bearings.

### [Disclosure]

### [Technical Problem]

An aspect of the present disclosure may provide a turbine apparatus having an increased lifespan and improved electricity generation efficiency, and able to easily use waste heat by replacing a mechanical (contact) bearing with a noncontact electromagnetic bearing, and stabilizing operations of an apparatus through appropriate disposition of a mechanical bearing with structural improvement of a disk unit, and a waste heat recovery power generation system having the same.

### [Technical Solution]

According to an aspect of the present disclosure, a turbine apparatus may include: a rotary shaft connected to an impeller to which rotational force is applied by a working fluid; an electricity generation unit connected to the rotary shaft to generate electricity; a radial electromagnetic bearing unit provided on at least one of a front side and a rear side of the electricity generation unit to support the rotary shaft in a noncontact manner while allowing a gap to be formed between the rotary shaft and the radial electromagnetic bearing unit; and an axial electromagnetic bearing unit provided on at least one point of the rotary shaft to control displacement of the rotary shaft in an axial direction, characterised in that the turbine apparatus comprises an apparatus housing unit provided to support electromagnetic bearing units and encompassing the electromagnetic bearing units, the axial electromagnetic bearing unit comprises an electromagnet fixed to the apparatus housing unit and having a groove, a disk unit is arranged on the rotary shaft and formed using a magnetic substance, wherein the disk unit comprises a disk provided on the rotary shaft or a connection shaft connected between the rotary shaft and the impeller in a radial direction of the rotary shaft, and a ring provided on the disk in the axial direction of the rotary shaft to be inserted into the groove of the electromagnet.

According to another aspect of the present disclosure, a waste heat recovery power generation system including a turbine apparatus may include: the turbine apparatus described above; a working fluid supply unit provided to supply a working fluid to the turbine apparatus and using waste heat; and a working fluid processing unit processing the working fluid extracted by the turbine apparatus.

### [Advantageous Effects]

According to an aspect of the present disclosure, by replacing a mechanical contact power transfer device (a bearing, a screw, or the like) in an existing turbine apparatus with a noncontact electromagnetic bearing to remove friction therefrom so as to use a low-pressure, low-temperature working fluid (refrigerant) instead of using a liquid (water), a turbine lifespan may be increased and electricity generation efficiency of the turbine may be significantly improved.

In detail, axial and radial displacement of a rotary shaft of a turbine apparatus according to an exemplary embodiment in the present disclosure in a radial direction and an axial direction may be precisely controlled through a disk unit linked to the axial electromagnetic bearing unit by a bi-directional structure.

Further, a turbine apparatus according to an exemplary embodiment in the present disclosure may provide a mechanical bearing unit operating during a pause in operations of an electromagnetic bearing, of which operations may be stably maintained through adjustment of a width of a gap between an electromagnetic bearing unit and a mechanical bearing unit.

Accordingly, in the case of a power generation system including the turbine apparatus of the present disclosure, a sufficient amount of electricity may be obtained even in the case of using a low-temperature working fluid. Thus, commercialization of existing industrially-generated waste heat is facilitated so that a waste heat recovery rate may be significantly increased.

### [Description of Drawings]

FIG. 1 is a configuration diagram illustrating an overall configuration of an power generation system according to an exemplary embodiment in the present disclosure.
FIGS. 2A and 2B are configuration diagrams illustrating a turbine apparatus according to first and second exemplary embodiments of the present disclosure.
FIGS. 3 and 4 are a front view and a partially cutaway perspective view illustrating arrangement of permanent magnets of an electricity generation unit provided in a turbine apparatus according to an exemplary embodiment in the present disclosure.
FIGS. 5A and 5B are graphs illustrating magnetic force according to an arrangement of permanent magnets of an electricity generation unit illustrated in FIGS. 3 and 4.
FIGS. 6A and 6B are views illustrating the principle of magnetic levitation of an electromagnetic bearing means, based on an electromagnet and a permanent magnet, provided in a turbine apparatus according to an exemplary embodiment in the present disclosure.

### [Best Mode for Invention]

Hereinafter, exemplary embodiments of the present disclosure will be described in detail with reference to the accompanying drawings. The disclosure may, however, be exemplified in many different forms and should not be construed as being limited to the specific embodiments set forth herein, and those skilled in the art and understanding the present disclosure can easily accomplish retrogressive inventions or other embodiments included in the scope of the present disclosure by the addition, modification, and removal of components within the same scope, but those are construed as being included in the scope of the present disclosure. Like reference numerals will be used to designate like components having similar functions throughout the drawings within the scope of the present disclosure.

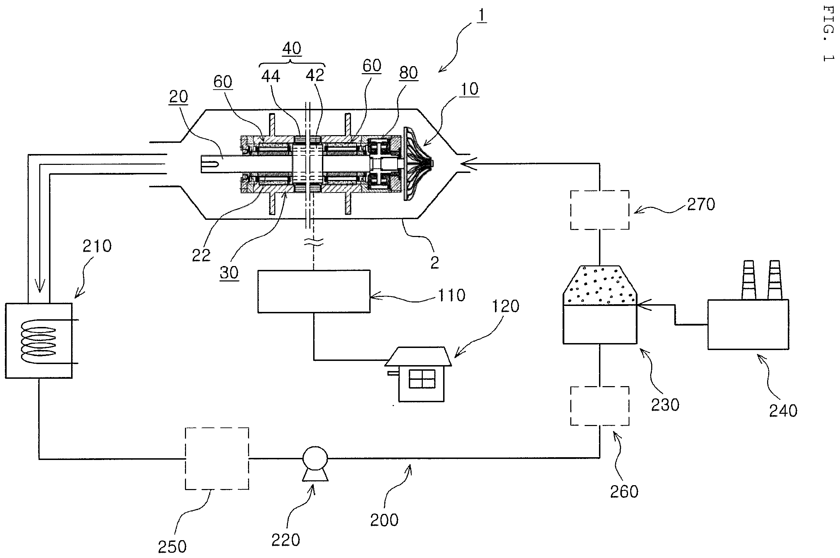

First, FIG. 1 and FIGS. 2 to 6 illustrate a detailed configuration of a waste heat recovery power generation system including a turbine apparatus according to an exemplary embodiment in the present disclosure, and a turbine apparatus 1 according to an exemplary embodiment in the present disclosure.

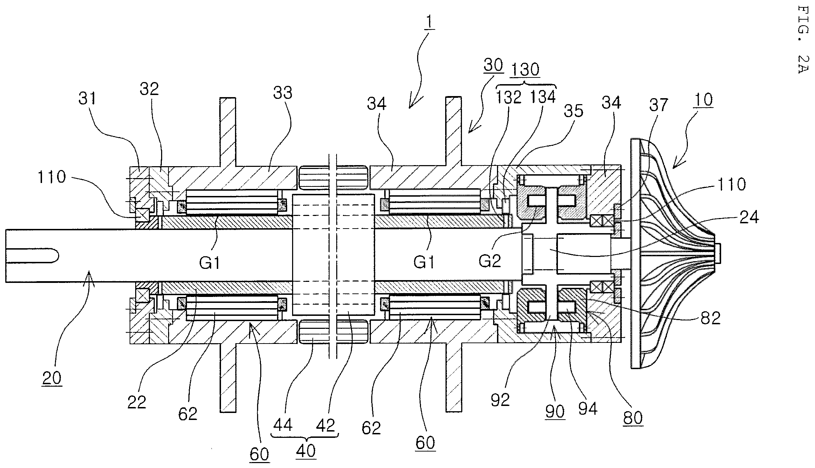

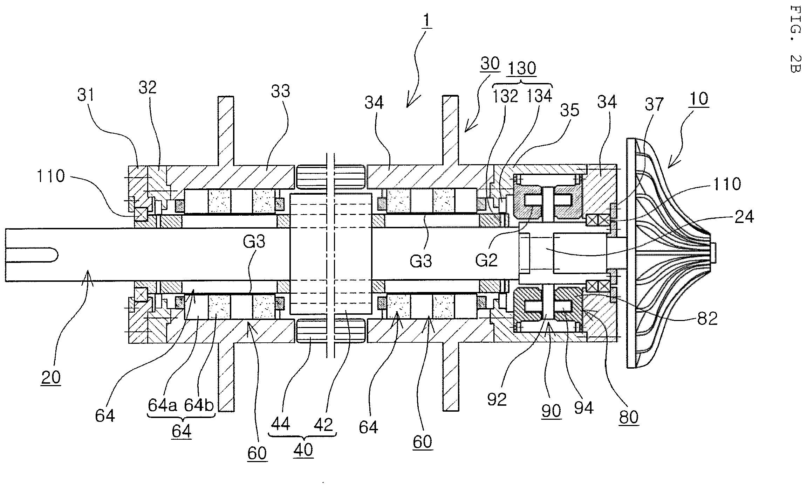

Thus, the turbine apparatus 1 according to the exemplary embodiment in the present disclosure will first be described with reference to FIGS. 2 to 6, and the waste heat recovery power generation system 200 including the turbine apparatus of the present disclosure will then be described.

Although illustrated in detail below, FIGS. 2A and 2B separately illustrate an electromagnetic bearing 60 provided in a radial direction of a rotary shaft as an apparatus using an electromagnet 62 and an electromagnetic bearing 60 provided in a radial direction of a rotary shaft as an apparatus using a permanent magnet 64, and other constituent elements thereof are the same as one another.

Thus, FIG. 2A will be principally described with respect to constituent elements thereof, and a difference therefrom will be described with reference to constituent elements of FIG. 2B.

As illustrated in FIG. 2A, the turbine apparatus 1 according to the exemplary embodiment in the present disclosure may basically include a rotary shaft 20 connected to an impeller 10 to which rotational force is applied from an working fluid, an electricity generation unit 40 connected to the rotary shaft 20 to generate electricity, and a plurality of electromagnetic bearing units arranged in a first direction of the rotary shaft and a second direction of the rotary shaft, different from each other.

Here, according to the exemplary embodiment in the present disclosure, the first direction and the second direction of the rotary shaft, which are directions different from each other, may be understood as being a radial direction of the rotary shaft and an axial direction of the rotary shaft.

In addition, according to an exemplary embodiment in the present disclosure, the rotary shaft 20 or a roll structure 22 coupled to an outer surface thereof may be used. The roll structure 22 described as above may be used only by replacing a roll structure at the time of coupling or maintenance of components relevant thereto, and with respect to an electromagnetic bearing element, in the case of using a magnetic substance, it may be desirable that a roll structure be formed of a magnetic substance other than the magnetic substance of which an overall rotary shaft is formed.

In this case, the roll structure may have a ring shaped structure as viewed from a front side thereof.

In addition, in the exemplary embodiment of the present disclosure described below, the first direction will be described as a direction limited to a radial direction. The electromagnetic bearing unit 60 provided in a radial direction of the rotary shaft to be described in detail below will be described as being 'a radial electromagnetic bearing unit 60', and an electromagnetic bearing unit 80 provided in an axial direction of the rotary shaft will be described as being 'an axial electromagnetic bearing unit 80'.

Thus, most existing turbine apparatuses employ mechanical contact-type bearing components to be used in supporting a rotary shaft. Meanwhile, as illustrated in FIG. 2A, the turbine apparatus 1 according to an exemplary embodiment in the present disclosure may employ radial and axial electromagnetic bearing units 60 and 80 therein so as to provide a bearing element supporting a rotary shaft as a non-contact bearing element.

In detail, the turbine apparatus 1 according to an exemplary embodiment in the present disclosure has a characteristic that two radial electromagnetic bearing units 60 and at least one axial electromagnetic bearing unit 80 are arranged therein.

On the other hand, although FIGS. 2A and 2B illustrate the case in which the axial electromagnetic bearing unit 80 is disposed between the radial electromagnetic bearing unit 60 and the impeller 10, the number of installations thereof or the position thereof is not limited to the illustration of FIG. 2. For example, the axial electromagnetic bearing unit 80 may be disposed between the radial electromagnetic bearing units 60.

However, in a case in which it is desirable to arrange two radial electromagnetic bearing units 60 and one axial electromagnetic bearing unit 80, the arrangement of FIG. 2 may be desirable.

Thus, in the case of the turbine apparatus 1 according to an exemplary embodiment in the present disclosure, at the time of a high speed rotation of the impeller 10 to which the rotational force is applied due to collision of an working fluid therewith, the rotary shaft 20 rotates at a high speed, and when the rotary shaft 20 rotates at a high speed as described above, electricity may be generated by the electricity generation unit 40. In addition, the radial bearing unit 60 according to an exemplary embodiment in the present disclosure to be described in detail below may stably support the rotation of the rotary shaft in a frictionless manner, and the axial electromagnetic bearing unit 80 may control a change in axial displacement thereof electromagnetically.

Thus, since the turbine apparatus of the present disclosure replaces a mechanical contact element such as an existing ball bearing or thrust bearing, stable electricity generation may be obtained even in the case of using a low pressure and low temperature working fluid by reducing limitations of electricity generation commercialization due to friction between existing bearing elements.

In this case, the working fluid used in the turbine apparatus 1 according to the exemplary embodiment in the present disclosure may be a low temperature working fluid in a range of 150 - 300°C, and for example, as the working fluid used in the turbine apparatus 1 of the present disclosure, H₂, R134a, R245a, n-pentane, general biogas, or the like, having relatively great expansion force even at a low temperature may be used instead of using existing water (liquid).

Thus, since the turbine apparatus 1 according to the exemplary embodiment in the present disclosure is provided to use a low temperature working fluid, considering that 60% or more of industrial waste heat may be within the temperature range described above, the apparatus according to the exemplary embodiment in the present disclosure may use exhaust gas generated by a heating furnace, a sintering furnace, a blast furnace, or the like, which is difficult to be used thorough an existing apparatus, as is, without an additional increase in temperature, or the like. Utilization of energy through the recovery of waste heat may be facilitated.

Such a low-temperature (low-pressure) working fluid may be used according to the exemplary embodiment in the present disclosure because the radial and axial electromagnetic bearing units 60 and 80 according to the exemplary embodiment in the present disclosure are used, instead of using a mechanical contact bearing element having severe friction according to the related art. Further, friction may not occur. Thus, the low temperature working fluid may be used without the occurrence of an existing temperature differential of 250°C.

As a result, extensively generated existing industrial exhaust gas may be used as a heat source as is, and thus, a waste heat recovery rate may be relatively high.

Next, as illustrated in FIGS. 2A and FIGS. 3 and 4, the electricity generation unit 40 in the turbine apparatus 1 of the present disclosure may include a permanent magnet 42 provided on the rotary shaft 20, in detail, a rotator, and a coil 44 provided on an outer side thereof in a housing unit 30, in detail, a stator.

Thus, when the working fluid collides with the impeller 10 and rotational force is thereby applied to the rotary shaft 20 to rotate at a high speed, the permanent magnet 42 may rotate to apply magnetic force to a coil, such that electricity is generated in a commonly known manner.

In this case, the turbine apparatus 1 of the present disclosure may be provided such that the permanent magnets 42 of the electricity generation unit 40 may have a specific structure, and in the electricity generation unit 40 of the present disclosure, a plurality of the permanent magnets 42 may be arranged in a circumferential direction of the rotary shaft 20.

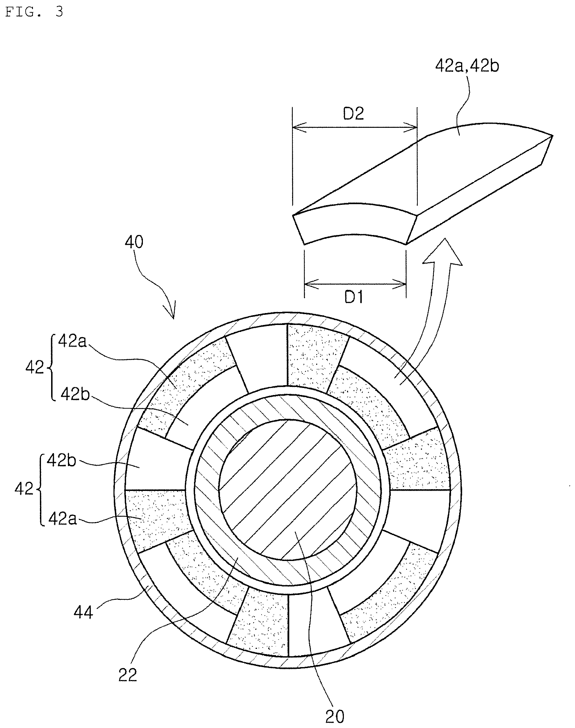

In detail, as illustrated in FIGS. 2A and 3, the permanent magnets 42 of the electricity generation unit 40 according to the exemplary embodiment in the present disclosure may be arranged in a structure in which magnets having different polarities are stacked in at least one of a circumferential direction and a radial direction of the rotary shaft.

In further detail, the permanent magnets 42 may be provided in a manner in which magnets 42a and 42b having different polarities (S-pole, N-pole) are alternately stacked and arranged.

In this case, the permanent magnets may be provided such that appropriate magnet units are continuously provided in a length direction of rotation.

Thus, as illustrated in FIG. 3, in the case of the permanent magnets 42 of the electricity generation unit 40 according to the exemplary embodiment in the present disclosure, S-pole magnets 42a and N-pole magnets 42b, which are magnet units having an appropriate length in a circumferential direction of the rotary shaft 20, are alternately stacked horizontally (an axial radial direction) and vertically (an axial circumferential direction), and thus, may generate a relatively further increased amount of magnetic force so that electricity generation capability of the coil 44 may be increased as compared to a case in which magnets are simply arranged.

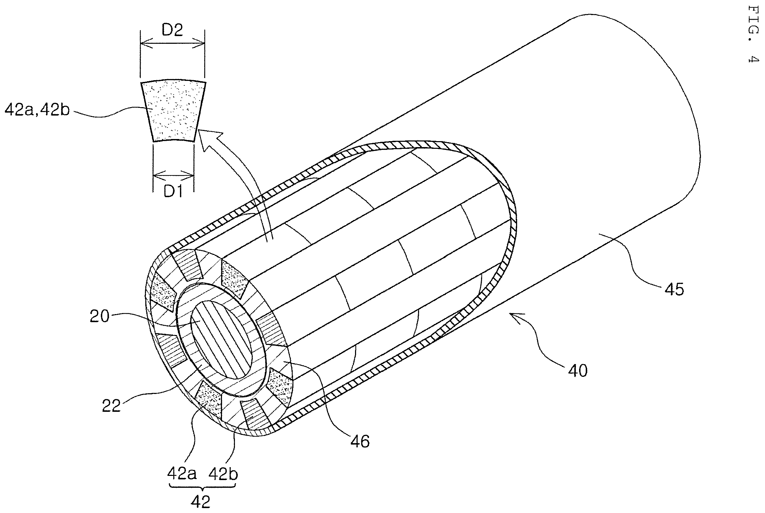

Alternatively, as illustrated in FIG. 4, the permanent magnets 42a and 42b having the same polarity may be alternately arranged in the circumferential direction of the rotary shaft 20, and in this case, although schematically illustrated in the drawing, the magnets may be provided such that magnet units may be mounted on a mounting portion of a drum element 46.

Accordingly, since FIG. 4 illustrates the structure in which the magnet units are continuously provided, a relatively sufficient amount of magnetic force may be generated as compared to a case in which an existing single elongated magnet is used, so that electricity generation capability through a coil may be further increased.

In further detail, as illustrated in FIGS. 3 and 4, the permanent magnets of the electricity generation unit 40 according to the exemplary embodiment in the present disclosure may have a quadrilateral structure in which cross sections thereof are increased outwardly in the radial direction of the rotary shaft.

For example, in the case of a magnet unit, when a magnet unit has a quadrilateral structure in which an upper width D2 thereof is greater than a bottom width D1 thereof, since an area in which magnetic force is generated is extended in the radial direction, a relatively sufficient amount of magnetic force may be generated.

For example, the quadrilateral structure of the permanent magnet of FIGS. 3 and 4 may suppress loss of eddy current at the time of rotation of the rotary shaft to increase electricity generation capability.

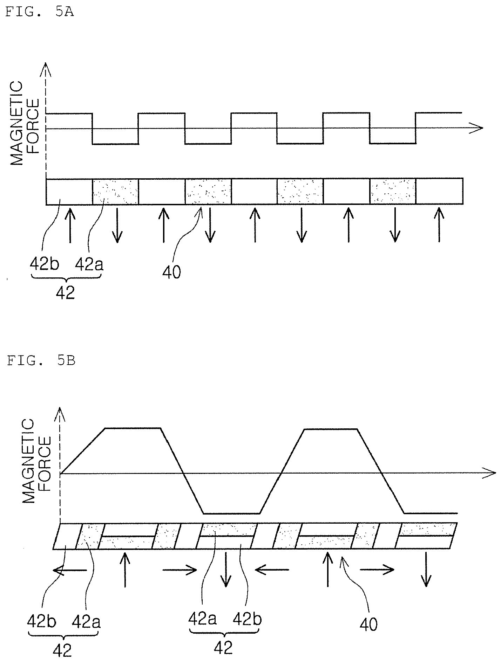

On the other hand, in further detail, the permanent magnets may be formed on the rotary shaft 20 in the arrangement illustrated in FIG. 4, and in connection therewith, FIGS. 5A and 5B illustrate graphs illustrating a degree of generated magnetic force based on the arrangement of the permanent magnets.

In detail, as compared to the case of alternately arranging the permanent magnets 42a and 42b having different polarities, without stacking thereof as illustrated in FIG. 5A, when the permanent magnets 42a and 42b having different polarities are arranged to be laminated in a vertical direction and in a horizontal direction so as to be stacked in directions different from each other as illustrated in FIG. 5B, magnetic force generation capability may be significantly increased. Thus, although schematically illustrated in FIG. 2A, in the electricity generation unit 40 according to the exemplary embodiment in the present disclosure, even in a case in which the permanent magnet 42 on the rotary shaft (rotator) side and a stator of the coil 44 are disposed at a greater interval of about 2.5 times an interval of 10mm according to the related art, a sufficient amount of electricity may be generated.

Thus, the arrangement of the permanent magnets as illustrated in FIGS. 2A and 4 may be most desirable, but the arrangement of the permanent magnets as illustrated in FIG. 3 may provide sufficient electricity generation capability.

In further detail, in the case of the turbine apparatus 1 of the present disclosure, when the impeller is rotated by rotational force applied thereto as a working fluid (refrigerant) collides with the impeller 10 and expands, the permanent magnet 42, a stator, may also be rotated integrally, and thus, a time-varying magnetic field generated by the stator may generate an induction current in a steel plate from the coil, a fixed stator, to generate electricity.

In further detail, at the time of rotation of the rotary shaft of a turbine apparatus in the case of the related art, a screw is forcedly rotated in an axial direction to generate line contact and point contact in a radial direction by a ball, a thrust or a roller bearing element. Thus, in the case of the related art, a considerable amount of starting torque is required at an initial stage of electricity generation, and in detail, oil (lubricant) leakage or a water hammer phenomenon occurs in a bearing element to deteriorate maintenance efficiency, and there is also limitation in electricity generation efficiency. However, in the turbine apparatus of the present disclosure, medium, low temperature waste heat reaching 60% of industrial waste heat may be recovered, and thus, a fluid application range may be extended and electricity generation efficiency may be increased.

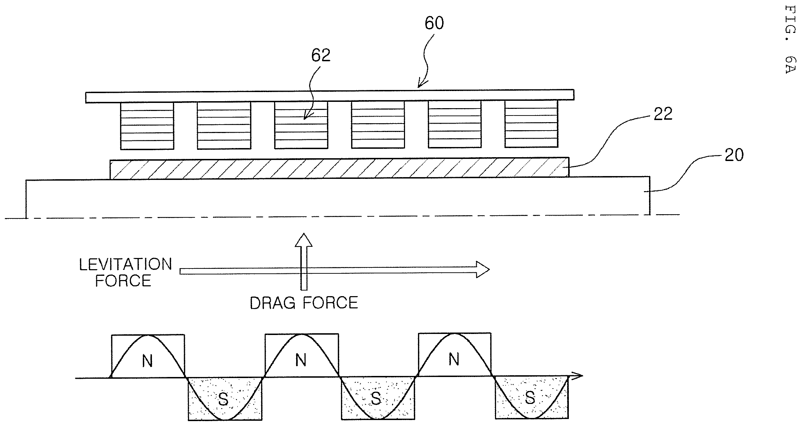

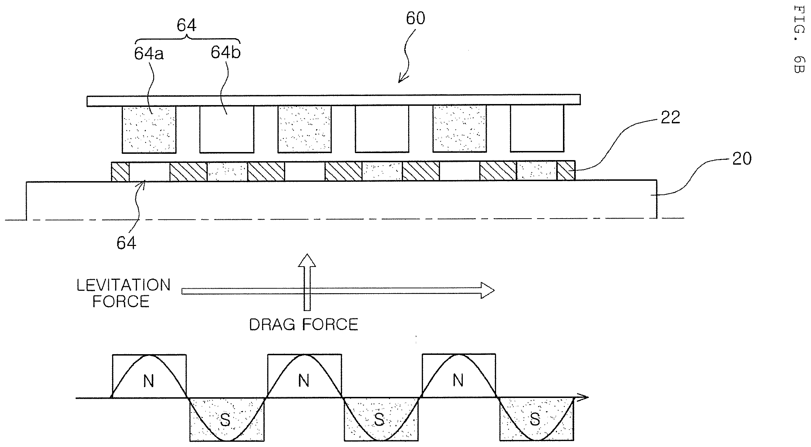

As illustrated in FIGS. 2A, 2B, and FIG. 6, an electromagnetic bearing unit according to an exemplary embodiment in the present disclosure, which supports highspeed rotation of the rotary shaft 20, based on a noncontact and frictionless manner by substantially using (electro)magnetic force in the turbine apparatus 1 of the present disclosure, is illustrated.

In detail, as illustrated in FIGS. 2A and 2B, the electromagnetic bearing unit of the turbine apparatus 1 according to an exemplary embodiment in the present disclosure may include a radial electromagnetic bearing unit 60 provided on at least one of a front side and a rear side of the electricity generation unit 40 and supporting the rotary shaft 20 in a noncontact and frictionless manner while allowing a gap G1 to be formed between the rotary shaft and the radial electromagnetic bearing unit 60, and an axial electromagnetic bearing unit 80 provided on at least one point of the rotary axis to control displacement of the rotary shaft in an axial direction thereof.

In detail, the axial electromagnetic bearing unit 80 according to the exemplary embodiment in the present disclosure may be provided to control (prevent) axial displacement of the rotary shaft while allowing a gap G2 to be formed between the bearing unit and a disk unit 90 arranged on the rotary shaft 20, through electromagnetic drag force as described below in detail with reference to FIG. 6.

On the other hand, in more detail, the turbine apparatus 1 of the present disclosure may further include the radial electromagnetic bearing unit 60 on the rotary shaft 20, and a roll structure 22, an integral hollow structure, on which the permanent magnet 42 of the electricity generation unit 40 described above is mounted.

Thus, as illustrated in FIGS. 2A and 2B, in the apparatus of the present disclosure, the rotary shaft 20 may be coupled to a connection axis 24 coupled to and combined with the impeller 10, the roll structure 22 having a hollow pipe shape may be coupled outwardly of the rotary shaft 20, and the roll structure 24 described above may be formed using a (ferro)magnetic substance to generate electromagnetic drag force.

Also, only a rotary shaft may be used without using the roll structure 22 described above, and thus, the rotary shaft 20 or the roll structure 22 may be formed using a (ferro)magnetic substance.

Subsequently, the radial electromagnetic bearing unit 60 of the present disclosure, which allows the rotary shaft 20 to be supported in a noncontact and frictionless manner in the turbine apparatus 1 of the present disclosure and allows a low temperature working fluid to be used by replacing an existing mechanical contact bearing element, will be described in detail.

For example, as illustrated in FIG. 2A, the radial electromagnetic bearing unit 60 according to the exemplary embodiment in the present disclosure may include an electromagnet 62 generating electromagnetic drag force to form a gap 'G1' between the rotary shaft 20 or the roll structure 22 provided on the rotary shaft, respectively formed using a (ferro)magnetic substance, and the radial electromagnetic bearing unit 60.

The electromagnet 62 as described above may be arranged on and fixed to an outer side of the rotary shaft through a housing unit 30 described below in detail.

Thus, as illustrated in FIG. 2A, when a single phase or three phase alternating current is applied to the electromagnet 62 through a pulse width modulator not shown in the drawing, the electromagnet may generate a time-varying magnetic field, and electromagnetic drag force between the electromagnet and the rotary shaft 20 or the roll structure 22 provided on the rotary shaft may be generated. As a result, a predetermined gap 'G1' may be formed between the rotary shaft or the roll structure 22 and the electromagnet, thereby allowing the rotary shaft to be supported in a noncontact frictionless manner, based on magnetic levitation.

On the other hand, the electromagnets may be provided by stacking appropriate electromagnet units.

Here, although schematically illustrated in FIG. 2A, an electromagnet 62 provided on the housing unit 30 side may be provided by stacking ring-shaped electromagnets or electromagnets having a short circuit ring structure (a ring structure) in a circumferential direction of the rotary shaft, as viewed from a front side of the rotary shaft.

Alternatively, as illustrated in FIG. 2B, in the turbine apparatus 1 according to the exemplary embodiment in the present disclosure, the radial electromagnetic bearing unit 60 may be provided using a permanent magnet.

For example, the radial electromagnetic bearing unit 60 having another form may be configured of a permanent magnet 64 provided on the rotary shaft 20 or the roll structure 22 provided on the rotary shaft, and an adjacent permanent magnet 64 in which an S pole permanent magnet 64a and an N pole permanent 64b provided on the housing unit 30 side and adjacent to each other are alternately arranged.

Thus, a gap G3 between the permanent magnet 64 on the rotary shaft side and the permanent 64 on the housing unit side may be formed due to magnetic levitation at the time of rotation of the rotary shaft 20, and may support the rotary shaft 20 in a noncontact, frictionless state.

On the other hand, FIGS. 6A and 6B illustrate the principle of allowing the rotary shaft to be supported in the magnetic levitation manner by the radial electromagnetic bearing unit 60 according to the exemplary embodiment in the present disclosure.

In detail, in FIG. 6A, when a single phase or three phase alternating current is applied to the S pole electromagnet 62a and the N pole electromagnet 62b disposed to have a gap between the electromagnetic bearing unit and the roll structure 22 formed of the (ferro)magnetic substance and coupled to an outer circumferential surface of the rotary shaft 20 as described above, an induction current may be generated by a time-varying magnetic field in which a magnetic field is changed according to time, and drag force and levitation force may be formed between the electromagnet and the roll structure. In this case, the drag force, for example, the magnetic levitation force, rather than the levitation force, may be formed before reaching a critical rotation speed.

In addition, as illustrated in FIG. 6B, the permanent magnets 64 may be arranged on the rotary shaft or the roll structure 22, and on surfaces opposed to the rotary shaft or the roll structure, the S pole electromagnet 64a and the N pole electromagnet 64b may be alternately arranged on the housing unit 30 side. In this case, at the time of rotation of the rotary shaft, an induction current may be generated by a time-varying magnetic field in which a magnetic field is changed according to time, and drag force and levitation force may be formed between the permanent magnets. Thus, the magnetic levitation force may allow for a non-contact frictionless bearing to be formed.

Subsequently, as illustrated in FIGS. 2A and 2B, although schematically illustrated in the drawings, in a manner similar to that of the radial electromagnetic bearing unit 60, the axial electromagnetic bearing unit 80 according to the exemplary embodiment in the present disclosure may also include an electromagnet 82. On an inner side of the axial electromagnetic bearing unit 80 of the electromagnet described above, a disk unit 90 arranged in a radial direction of a rotary shaft on the rotary shaft 20 or a connection shaft 24 via welding or the like may be provided, for example, a disk 92 arranged on the connection shaft 24, and a ring 94, formed to be perpendicular to the disk, may be provided.

Here, the disk 92 and the ring 94 may be formed using a magnetic substance.

Thus, as illustrated in FIGS. 2A and 2B, when a single phase or three phase alternating current is applied to the electromagnet 82 configuring the axial electromagnetic bearing unit 80 from a pulse width modulator, as the radial electromagnetic bearing unit 60 has been sufficiently described above, the magnetic levitation force may be formed between the axial electromagnetic bearing unit 80 and the disk unit 90 to thus form the gap 'G2' therebetween. Thus, the disk rotates inside the electromagnet, but to maintain the gap in a noncontact scheme, such that with respect to an occurrence of minute displacement in the axial direction of the rotary shaft, displacement in the axial electromagnetic bearing unit may be limited, to control axial displacement.

Next, as described above with respect to the turbine apparatus 1 according to the exemplary embodiment in the present disclosure, FIG. 2 illustrates the housing unit 30 of an apparatus, linked to the rotary shaft 20, or the roll structure 22 provided on the rotary shaft, and the connection shaft 24 connected to the impeller 10 and provided to support the radial electromagnetic bearing unit 60 and the axial electromagnetic bearing unit 80 while encompassing the radial electromagnetic bearing unit 60 and the axial electromagnetic bearing unit 80.

In detail, as illustrated in FIG. 2, in the housing unit 30 of the present disclosure, the electromagnet 62 or the permanent magnet 64 of the radial electromagnetic bearing unit 60 provided in a central portion thereof may be fixedly mounted, and a rear-side third housing 32 and a front-side fourth housing 35 may be coupled to both sides of the central first and second housings 33 and 34, with the coil 44 of the stator therebetween, and a rear-side first cap member 31 and a front-side second cap member 34 may be coupled to an outer side thereof, respectively, via bolting, in a sequential manner.

In addition, the electromagnets of the axial electromagnetic bearing unit 80 may be coupled via a bolt or the like, outside the disk unit, in a space between the front-side fourth housing 35 and the second cap member 34.

In addition, fixing rings 38 fixing an electromagnet or a permanent magnet to be coupled thereto may be provided in the housings so as to prevent the separation of the electromagnet or the permanent magnet therefrom.

Then, the turbine apparatus 1 according to the exemplary embodiment in the present disclosure may further include a sensor unit 130 sensing rotation of the rotary shaft 20. For example, the sensor unit 130 may include a first sensor 132 (or sensor unit) provided on the rotary shaft or the roll structure 22 coupled to the rotary shaft, and at an outer side thereof, a sensor unit 134 or a second sensor coupled to inner side surfaces of the third housing 32 and the fourth housing 35.

Thus, when the rotary shaft, or the roll structure 22 formed integrally with the rotary shaft, is rotated, the sensor may also rotate together therewith, and thus, whether or not the rotary shaft is rotated, or a rotation speed thereof, may be sensed in real time, by the sensor unit 130.

Subsequently, as illustrated in FIGS. 2A and 2B, a mechanical contact bearing 110 may be further included so as to support the rotary shaft during a pause in operations of the electromagnetic bearing between the rotary shaft 20 and an apparatus casing 110.

In the electromagnetic bearing units 60 and 80 according to the exemplary embodiment in the present disclosure, for example, in a case in which the electromagnet does not perform magnetic levitation due to an abnormality in the supply of current, the mechanical contact bearing 110 may replace rotation of the rotary shaft to perform the support thereby.

However, in the case of normal electricity generation, for example, when an alternating current is normally applied, the rotation of the rotary shaft should be supported through the radial electromagnetic bearing unit 60, and thus, the gap 'G1' between the radial electromagnetic bearing unit 60 and the rotary shaft or the roller structure provided on the rotary shaft, or the gap 'G3' between the permanent magnets 64 of the radial electromagnetic bearing unit may be greater than a gap between the mechanical bearing 110, the rotary shaft (a coupling member) and the connection shaft 24.

For example, the gaps G1 and G3 of the electromagnetic bearing unit side may be in a range of 80 - 200pm, and the gap of the mechanical contact bearing 110 side may be in a range of 40 - 70µm, so that only during a pause in operations of the electromagnetic bearing, the support of the rotary shaft through the mechanical contact bearing 110 may be implemented.

Here, although not shown as a separate reference numeral in FIGS. 2A and 2B, the mechanical contact bearing 110 may be provided between a fixing ring (a reference numeral thereof not shown) provided on an end of the roller structure 22 of the rotary shaft 20 and the first cap member 31 of the housing unit 30.

For example, as illustrated in FIG. 2B, the gap 'G3' between the permanent magnets 64 of the radial electromagnetic bearing unit 60, based on a permanent magnet, may be within a range of 5 - 200pm, and the gap 'G2' between the electromagnet 82 of the axial electromagnetic bearing unit 80 and the disk 92 and the ring 94 of the disk unit 90 may be within a range of about 100- 500µm.

Next, FIG. 1 illustrates a waste heat recovery power generation system 200 including the turbine apparatus 1 according to an exemplary embodiment in the present disclosure described above.

First, electrical power generated by the electricity generation unit 40 of the turbine apparatus 1 according to the exemplary embodiment in the present disclosure may be supplied to sources of demand such as homes 120, industrial facilities, and the like, after dropping a voltage through a power transmitting unit 110, for example, transmission lines and high-voltage substations, voltage substations and pole transformers.

In addition, as illustrated in FIG. 1, the turbine apparatus 1 according to the exemplary embodiment in the present disclosure may be provided inside a casing 2 sealed from the external environment, and in the casing 2, an extraction line extracting an expanded working fluid extracted and heated after the generation of electricity with a working fluid supply line may be provided to be linked thereto.

Thus, the waste heat recovery power generation system 200 according to an exemplary embodiment in the present disclosure may be configured to include the turbine apparatus 1 described above, a working fluid supply unit 230 provided to supply a working fluid to the turbine apparatus and using waste heat, and a working fluid processing unit 210 processing the working fluid extracted by the turbine apparatus.

Here, in detail, the working fluid supply unit 230 according to the exemplary embodiment in the present disclosure may be a heater linked to a waste heat supply source 240, for example, a sintering furnace of a steel factory generating high-temperature exhaust gas (waste heat), a blast furnace thereof, or the like, and the working fluid processing unit 210 may be a condenser condensing a low-pressure, low-temperature working fluid extracted by the turbine apparatus 1 of the present disclosure to be heated and expanded, and generating condensed working fluid (refrigerant).

Thus, as described above, the waste heat recovery power generation system 200 may be a system recovering a heat source within an approximately low temperature range (60 - 300°C) to thus produce electrical power by a medium of a (low-pressure) low-temperature working fluid.

Further, the condenser 210 may change a phase of the low temperature working fluid extracted by the turbine apparatus 1 of the present disclosure into a liquid, and the condensed working fluid, condensed through the condenser 210, that is, a refrigerant, may be supplied to the heating furnace 230 through a pump 250. Here, a condensation tank 250 and a preheater 260 may be disposed upstream and downstream of the pump, respectively, and a superheater 270 may be disposed between the heater and the turbine apparatus.

### [industrial Applicability]

Accordingly, the turbine apparatus according to an exemplary embodiment in the present disclosure and an power generation system including the same described above may increase electricity generation efficiency while extending the lifespan of a turbine and may facilitate the use of waste heat by replacing a mechanical (contact) bearing structure with a noncontact electromagnetic bearing. In addition, an apparatus may be stably operated through appropriate disposition of a mechanical bearing unit with structural improvement of a disk unit.

While exemplary embodiments have been shown and described above, it will be apparent to those skilled in the art that modifications and variations could be made without departing from the scope of the present invention as defined by the appended claims.

## Claims

1. A turbine apparatus comprising:
a rotary shaft (20) connected to an impeller (10) to which rotational force is applied by a working fluid;
an electricity generation unit (40) connected to the rotary shaft to generate electricity;
a radial electromagnetic bearing unit (60) provided on at least one of a front side and a rear side of the electricity generation unit (40) to support the rotary shaft (20) in a noncontact manner while allowing a gap to be formed between the rotary shaft (20) and the radial electromagnetic bearing unit (60); and
an axial electromagnetic bearing unit (80) provided on at least one point of the rotary shaft (20) to control displacement of the rotary shaft (20) in an axial direction,
**characterised in that** the turbine apparatus further comprises an apparatus housing unit (30) provided to support electromagnetic bearing units and encompassing the electromagnetic bearing units,
the axial electromagnetic bearing unit (80) comprises an electromagnet (82) fixed to the apparatus housing unit (30) and having a groove, and
a disk unit (90) arranged on the rotary shaft made of a magnetic substance, wherein
the disk unit (90) comprises a disk (92) provided on the rotary shaft (20) or a connection shaft (24) connected between the rotary shaft (20) and the impeller (10) in a radial direction of the rotary shaft (20), and a ring (94) provided on the disk (92) in the axial direction of the rotary shaft (20) which is inserted into the groove of the electromagnet (82).

2. The turbine apparatus of claim 1, wherein the axial electromagnetic bearing unit (80) is provided to control the axial displacement while allowing a gap (G2) to be formed between the axial electromagnetic bearing unit (80) and the disk unit(90) provided on the rotary shaft.

3. The turbine apparatus of claim 1, wherein the electricity generation unit (40) comprises a rotator including a permanent magnet (42) provided on the rotary shaft (20), and a stator including a coil (44) arranged on an outer side thereof, and
the permanent magnet (42) of the electricity generation unit (40) is provided in a manner in which magnets having different polarities are alternately arranged along the rotary shaft (20) while being stacked in a circumferential direction and a radial direction of the rotary shaft (20), or the magnets having different polarities are disposed at an interval.

4. The turbine apparatus of claim 3, wherein the permanent magnet (42) provided as the rotator of the electricity generation unit (40) has a quadrilateral structure in which cross sections thereof are increased outwardly in the radial direction of the rotary shaft (20).

5. The turbine apparatus of claim 1, wherein the radial electromagnetic bearing unit (60) comprises an electromagnet (62) provided to allow magnetic levitation to occur, to form a gap between the radial electromagnetic bearing unit (60) and the rotary shaft (20) formed using a magnetic substance or a roll structure (22) provided on the rotary shaft (20).

6. The turbine apparatus of claim 1, wherein the radial electromagnetic bearing unit (60) comprises a permanent magnet (64) provided on the radial shaft or a roll structure provided on the rotary shaft (20), and adjacent permanent magnets (64) provided on the apparatus housing unit (30) to form a gap between the permanent magnet and the adjacent permanent magnets.

7. The turbine apparatus of claim 1, further comprising a mechanical contact bearing (110) disposed between the rotary shaft (20) and the apparatus housing unit (30) to support the rotary shaft (20) during a pause in operations of the electromagnetic bearing unit.

8. The turbine apparatus of claim 7, wherein a gap (G1) between the radial electromagnetic bearing unit (60) and the rotary shaft (20) or the roll structure provided on the rotary shaft (20), or a gap (G3) between permanent magnets (64) provided on the radial electromagnetic bearing unit (60) is greater than a gap with the mechanical contact bearing (110), to operate the mechanical contact bearing (110) during a pause in operations of the electromagnetic bearing unit.

9. The turbine apparatus of claim 1, further comprising a sensor unit (130) provided to sense rotation of the rotary shaft (20).

10. A waste heat recovery power generation system comprising:
a turbine apparatus;
a working fluid supply unit provided to supply a working fluid to the turbine apparatus and using waste heat; and
a working fluid processing unit processing the working fluid extracted by the turbine apparatus,
**characterised in that** the turbine apparatus is the turbine apparatus of claim 1.

## Patentansprüche

1. Turbinenvorrichtung, umfassend:
eine mit einem Laufrad (10) verbundene Drehwelle (20), auf die durch ein Arbeitsfluid eine Drehkraft aufgebracht wird;
eine mit der Drehwelle verbundene Elektrizitätserzeugungseinheit (40), um Elektrizität zu erzeugen;
eine an einer Frontseite und/oder einer Rückseite der Elektrizitätserzeugungseinheit (40) vorgesehene radiale elektromagnetische Lagereinheit (60), um die Drehwelle (20) in einer kontaktlosen Weise zu tragen, wobei ermöglicht wird, dass ein Spalt zwischen der Drehwelle (20) und der radialen elektromagnetischen Lagereinheit (60) gebildet wird;
und
eine an mindestens einem Punkt der Drehwelle (20) vorgesehene axiale elektromagnetische Lagereinheit (80), um die Verschiebung der Drehwelle (20) in einer axialen Richtung zu steuern,
**dadurch gekennzeichnet, dass** die Turbinenvorrichtung ferner eine Gehäuseeinheit (30) für die Vorrichtung umfasst, die dafür vorgesehen ist, elektromagnetische Lagereinheiten zu tragen und die elektromagnetischen Lagereinheiten zu umgeben, die axiale elektromagnetische Lagereinheit (80) einen Elektromagneten (82) umfasst, der an der Gehäuseeinheit (30) für die Vorrichtung befestigt ist und eine Nut aufweist, und
eine auf der Drehwelle angeordnete Scheibeneinheit (90) aus einer magnetischen Substanz, wobei
die Scheibeneinheit (90) eine auf der Drehwelle (20) vorgesehene Scheibe (92) oder eine in einer radialen Richtung der Drehwelle (20) zwischen der Drehwelle (20) und dem Laufrad (10) gekoppelte Verbindungswelle (24) und einen in der axialen Richtung der Drehwelle (20) auf der Scheibe (92) vorgesehenen Ring (94) umfasst, der in die Nut des Elektromagneten (82) eingebracht ist.

2. Turbinenvorrichtung nach Anspruch 1, wobei die axiale elektromagnetische Lagereinheit (80) dafür vorgesehen ist, die axiale Verschiebung zu steuern, während ermöglicht wird, dass ein Spalt (G2) zwischen der axialen elektromagnetischen Lagereinheit (80) und der auf der Drehwelle vorgesehenen Scheibeneinheit (90) gebildet wird.

3. Turbinenvorrichtung nach Anspruch 1, wobei die Elektrizitätserzeugungseinheit (40) einen auf der Drehwelle (20) vorgesehenen Rotor mit einem Permanentmagneten (42) und einen Stator mit einer auf einer Außenseite davon angeordneten Spule (44) umfasst, und
der Permanentmagnet (42) der Elektrizitätserzeugungseinheit (40) in einer Weise vorgesehen ist, in der Magnete mit unterschiedlichen Polaritäten abwechselnd entlang der Drehwelle (20) angeordnet sind, während sie in einer Umfangsrichtung und einer radialen Richtung der Drehwelle (20) gestapelt sind, oder die Magnete mit unterschiedlichen Polaritäten in einem Intervall angeordnet sind.

4. Turbinenvorrichtung nach Anspruch 3, wobei der als Rotor der Elektrizitätserzeugungseinheit (40) vorgesehene Permanentmagnet (42) eine viereckige Struktur aufweist, deren Querschnitte nach außen in der radialen Richtung der Drehwelle (20) zunehmen.

5. Turbinenvorrichtung nach Anspruch 1, wobei die radiale elektromagnetische Lagereinheit (60) einen Elektromagneten (62) umfasst, der dafür vorgesehen ist, eine magnetische Levitation zu ermöglichen, um einen Spalt zwischen der radialen elektromagnetischen Lagereinheit (60) und der Drehwelle (20) zu bilden, der unter Verwendung einer magnetischen Substanz oder einer auf der Drehwelle (20) vorgesehenen Rollstruktur (22) gebildet wird.

6. Turbinenvorrichtung nach Anspruch 1, wobei die radiale elektromagnetische Lagereinheit (60) einen auf der Radialwelle vorgesehenen Permanentmagneten (64) oder eine auf der Drehwelle (20) vorgesehene Rollstruktur und auf der Gehäuseeinheit (30) für die Vorrichtung vorgesehene benachbarte Permanentmagnete (64) umfasst, um einen Spalt zwischen dem Permanentmagneten und den benachbarten Permanentmagneten zu bilden.

7. Turbinenvorrichtung nach Anspruch 1, ferner umfassend ein Lager (110) mit mechanischem Kontakt, das zwischen der Drehwelle (20) und der Gehäuseeinheit (30) für die Vorrichtung angeordnet ist, um die Drehwelle (20) während einer Betriebspause der elektromagnetischen Lagereinheit zu tragen.

8. Turbinenvorrichtung nach Anspruch 7, wobei ein Spalt (G1) zwischen der radialen elektromagnetischen Lagereinheit (60) und der Drehwelle (20) oder der auf der Drehwelle (20) vorgesehenen Rollstruktur oder ein Spalt (G3) zwischen den auf der radialen elektromagnetischen Lagereinheit (60) vorgesehenen Permanentmagneten (64) größer ist als ein Spalt mit dem Lager (110) mit mechanischem Kontakt, um das Lager (110) mit mechanischem Kontakt während einer Betriebspause der elektromagnetischen Lagereinheit zu betreiben.

9. Turbinenvorrichtung nach Anspruch 1, ferner umfassend eine Sensoreinheit (130), die dafür vorgesehen ist, die Drehung der Drehwelle (20) zu erfassen.

10. Energieerzeugungssystem mit Abwärmerückgewinnung, umfassend:
eine Turbinenvorrichtung;
eine Zuführeinheit von Arbeitsfluid, die dafür vorgesehen ist, ein Arbeitsfluid zu der Turbinenvorrichtung und unter Verwendung von Abwärme zuzuführen; und
eine Verarbeitungseinheit des Arbeitsfluids, die das durch die Turbinenvorrichtung extrahierte Arbeitsfluid verarbeitet,
**dadurch gekennzeichnet, dass** die Turbinenvorrichtung die Turbinenvorrichtung nach Anspruch 1 ist.

## Revendications

1. Appareil à turbine comprenant :
un arbre rotatif (20) relié à un rotor (10) dans lequel la force de rotation est appliquée par un fluide de travail ;
une unité de production d'électricité (40) reliée à l'arbre rotatif pour produire de l'électricité ;
une unité de palier électromagnétique radial (60) conçue sur au moins l'un d'un côté avant et d'un côté arrière de l'unité de production d'électricité (40) pour supporter sans contact l'arbre rotatif (20) tout en permettant la formation d'un espace entre l'arbre rotatif (20) et l'unité de palier électromagnétique radial (60) ; et
une unité de palier électromagnétique axial (80) conçue sur au moins un point de l'arbre rotatif (20) pour commander le déplacement de l'arbre rotatif (20) dans une direction axiale,
**caractérisé en ce que** l'appareil à turbine comprend en outre une unité de logement de l'appareil (30) conçue pour supporter les unités de palier électromagnétique et englobant les unités de palier électromagnétique,
l'unité de palier électromagnétique axial (80) comprend un électroaimant (82) fixé à l'unité de logement de l'appareil (30) et présentant une rainure et
une unité de disque (90) agencée sur l'arbre rotatif constitué d'une substance magnétique, dans lequel
l'unité de disque (90) comprend un disque (92) conçu sur l'arbre rotatif (20) ou un arbre de liaison (24) relié entre l'arbre rotatif (20) et le rotor (10) dans une direction radiale de l'arbre rotatif (20) et une bague (94) conçue sur le disque (92) dans la direction axiale de l'arbre rotatif (20) qui est insérée dans la rainure de l'électroaimant (82).

2. Appareil à turbine selon la revendication 1, dans lequel l'unité de palier électromagnétique axial (80) est conçue pour commander le déplacement axial tout en permettant la formation d'un espace (G2) entre l'unité de palier électromagnétique axial (80) et l'unité de disque (90) conçue sur l'arbre rotatif.

3. Appareil à turbine selon la revendication 1, dans lequel l'unité de production d'électricité (40) comprend un dispositif de rotation comprenant un aimant permanent (42) conçu sur l'arbre rotatif (20) et un stator comprenant une bobine (44) agencée sur un côté extérieur de celui-ci et
l'aimant permanent (42) de l'unité de production d'électricité (40) est conçu d'une manière dans laquelle les aimants présentant différentes polarités sont agencés en alternance le long de l'arbre rotatif (20) tout en étant empilés dans une direction circonférentielle et une direction radiale de l'arbre rotatif (20), ou les aimants présentant différentes polarités sont disposés à un certain intervalle.

4. Appareil à turbine selon la revendication 3, dans lequel l'aimant permanent (42) conçu comme le dispositif de rotation de l'unité de production d'électricité (40) présente une structure quadrilatérale dans laquelle les sections transversales de ce dernier sont augmentées vers l'extérieur dans la direction radiale de l'arbre rotatif (20).

5. Appareil à turbine selon la revendication 1, dans lequel l'unité de palier électromagnétique radiale (60) comprend un électroaimant (62) conçu pour permettre à la lévitation magnétique de se produire, pour former un espace entre l'unité de palier électromagnétique radial (60) et l'arbre rotatif (20) formé à l'aide d'une substance magnétique ou d'une structure de rouleau (22) conçue sur l'arbre rotatif (20).

6. Appareil à turbine selon la revendication 1, dans lequel l'unité de palier électromagnétique radiale (60) comprend un aimant permanent (64), conçu sur l'arbre radial ou une structure de rouleau conçue sur l'arbre rotatif (20) et des aimants permanents adjacents (64) conçus sur l'unité de logement de l'appareil (30) pour former un espace entre l'aimant permanent et les aimants permanents adjacents.

7. Appareil à turbine selon la revendication 1, comprenant en outre un palier à contact mécanique (110) disposé entre l'arbre rotatif (20) et l'unité de logement de l'appareil (30) pour supporter l'arbre rotatif (20) pendant une pause dans le fonctionnement de l'unité de palier électromagnétique.

8. Appareil à turbine selon la revendication 7, dans lequel un espace (G1) entre l'unité de palier électromagnétique radiale (60) et l'arbre rotatif (20) ou la structure de rouleau conçue sur l'arbre rotatif (20), ou un espace (G3) entre les aimants permanents (64) conçus sur l'unité de palier électromagnétique radial (60) est supérieur à un espace avec le palier à contact mécanique (110), pour actionner le palier à contact mécanique (110) pendant une pause dans le fonctionnement de l'unité de palier électromagnétique.

9. Appareil à turbine selon la revendication 1, comprenant en outre une unité de capteur (130) conçue pour détecter la rotation de l'arbre rotatif (20).

10. Système de production de puissance à récupération de chaleur perdue comprenant
un appareil à turbine ;
une unité d'alimentation de liquide de travail conçue pour fournir un fluide de travail à l'appareil et utilisant la chaleur perdue ; et
une unité de traitement du fluide de travail traitant le fluide de travail extrait par l'appareil à turbine,
**caractérisé en ce que** l'appareil à turbine est l'appareil selon la revendication 1.
